# EUROPEAN PATENT APPLICATION

(11) **EP 3 231 856 A1**
(43) Date of publication of application: **18.10.2017**
(21) Application number: 16165676.4
(22) Date of filing: 15.04.2016
(51) Int. Cl.: C10L 9/08

(54) **COMBUSTIBLE PRODUCT**

(71) Applicant: Industrial Chemicals Group Limited, Grays Essex RM17 5DU (GB)
(72) Inventor: The designation of the inventor has not yet been filed
(74) Representative: Dummett Copp LLP

(57) **Abstract**

A process for producing combustible product from an organic or biomass feedstock, the process comprising:
mixing the feedstock with an alkaline material to give an alkaline aqueous mixture;
reacting the mixture under subcritical conditions at a temperature in the range of about 280°C to about 320°C and a pressure of about 6.6 MPato about 11.6 MPa (65 bar gauge to about 115 bar gauge); and
removing at least some of the water to leave a combustible product, which may be used to form an aqueous slurry, suspension or emulsion and combusted in a suitable engine.

## Description

### BACKGROUND

### a. Field of the Invention

The invention relates to a process for producing a combustible product from an organic or biomass feedstock, and to methods of using the product. Other aspects of the invention provide a liquid suspension or emulsion derived from the combustible product and suitable for use as a liquid fuel.

### b. Related Art

There have been many attempts at producing fuels and biogas from various forms of biomass and organic materials. There has been investigation into advanced conversion, using pyrolysis and gasification, of organic, plant and human waste to produce fuels and biogas. The biomass and organic feedstock is subjected to advanced conversion at temperatures of, for example, from 250 to 80°C.

Other processes include the generation of gaseous fuels, comprising methane from various forms of biomass organic feedstock using techniques such as anaerobic digestion.

One form of organic feedstock is sewage sludge in digested or raw form from the treatment of human faecal waste. Water treatment companies have the task of treating and disposing of large amounts of sewage sludge each year. Traditionally, a large proportion of the sewage sludge has been spread onto farmland as a fertiliser and soil improver. This process has its disadvantages. Firstly, the sewage sludge contains a large percentage of water, usually around 70%, and therefore is expensive to transport from the treatment site to the agricultural land to be treated. Also, farmers are increasingly turning away from using such material as fertiliser for various reasons including changes in legislation. It is therefore becoming increasingly difficult and expensive to treat and dispose of the large amount of sewage sludge produced each year.

Biomass has many forms occurring both naturally and from the waste industry. One such biomass material which is often treated as waste is wood fines, which is produced particularly from the recycling of wood materials. Wood fines are generally small pieces of wood in various different sizes with a low or zero commercial value. The particles of wood can vary from very small dust-like particles up to chunks or splinters of wood, or even longer pieces of material. They are often irregular in size and a batch of wood fines is quite heterogeneous in shape and dimensions. The legislation surrounding waste materials makes the disposal and reuse of recycled wood fines especially difficult due to the completely random and changing composition of the material.

US 2010/0162619 describes production of material or fuel from biomass by treating a solid - liquid mixture in the presence of an acid, at a temperature of above 100 °C and at a pressure of above 0.5 MPa (5 bar) for a treatment duration for at least one hour.

US 2012/0073189 describes a method for treating an organic waste, in which the organic waste is pressurised and continuously supplied to a high temperature and pressure treatment apparatus to produce a slurried material by blowing steam into the organic waste to cause a reaction while heating, pressurising and agitating. However, blowing steam into a medium under high pressure involves various engineering issues and is inherently unsafe. The method cannot provide a uniform heating of the reaction mixture and leads to unnecessary dilution of finished product with water, increasing drying costs.

US 2013/0011327 describes a laminar stream reactor for the production of hydrochar of a solid-fluid mixture of water and carbon-containing component, wherein the solid-liquid mixture is treated at a temperature of 100 - 300 °C, and a pressure of 0.5 - 7 MPa (5 - 70 bar). The reactor consists of tubular reactor units of largely vertical holding sections and direction-changing diverters. The holding sections are flown slower by the solid-liquid mixture than the remaining tube distances, as they have larger diameters. The total residence time is more than two hours.
Having laminar flow in the vertical pipe would result in the sedimentation of solid particles of the slurry as their density is higher than that of water and possible clogging of the pipework, especially at long residence times.

There remains a need to treat organic and biomass materials in a cost effective and sustainable way.

### SUMMARY OF THE INVENTION

Aspects of the invention are specified in the independent claims. Preferred features are specified in the dependent claims.

The invention provides a way to treat organic and biomass feedstock materials to produce a combustible product with high net calorific value. The process takes no more than 30 minutes. Longer reaction times may be employed but result in a significant reduction in particle size of the end product, which can make filtration difficult.

Advantageously, the feedstock materials do not need to have a low moisture content or be dried before processing.

Among many applications, the process is suitable for converting waste wood, including wood waste fines, into a useful combustible product. This is particularly advantageous because at present there is no viable long term sustainable solution to the problem of disposal of wood waste fines that does not involve landfill.

### BRIEF DESCRIPTION OF THE DRAWINGS

The present invention will now be further described, by way of example, with reference to the following figures, in which:
Figure 1 is a flow chart showing the preparation of organic and biomass feedstock;
Figure 2 is a flow chart showing the conversion of organic and biomass feedstock into combustible products; and
Figure 3 shows three flow charts depicting the options for the processing and use of the combustible product of the treatment/conversion process.

### DEFINITIONS

As used herein, the term "feedstock", as in "organic feedstock" and "biomass feedstock" as described above, is intended to mean material that contains organic and biomass components that have come from the remains of organisms, such as plants and animals, and their waste products. The material may have been treated in some way or be classed as waste before being used in the process of the invention.

As used herein, the term "combustible", as in "combustible product", is intended to mean material that is capable of being burnt and sustain combustion on its own.

As used herein, the term "alkaline", as in "alkaline material", is a substance that increases the pH of an aqueous organic feedstock material.

As used herein, the term "subcritical" refers to an aqueous mixture that is at a pressure and temperature below the critical point, and so the water is in exclusively liquid form, and not in a supercritical form or as steam.

### DETAILED DESCRIPTION

The feedstock materials contain a large amount of organic material which can be converted into a useful combustible product. The process of the present invention is concerned with a process of converting the feedstock, such as sewage sludge and wood, into a combustible product. The combustible product is typically in the form of a coal-like material and it may optionally be further processed to provide a combustible product in liquid form.

Due to the difference in moisture content of organic and biomass feedstock the process prepares the materials in different methods to achieve the optimal feedstock conditions required.

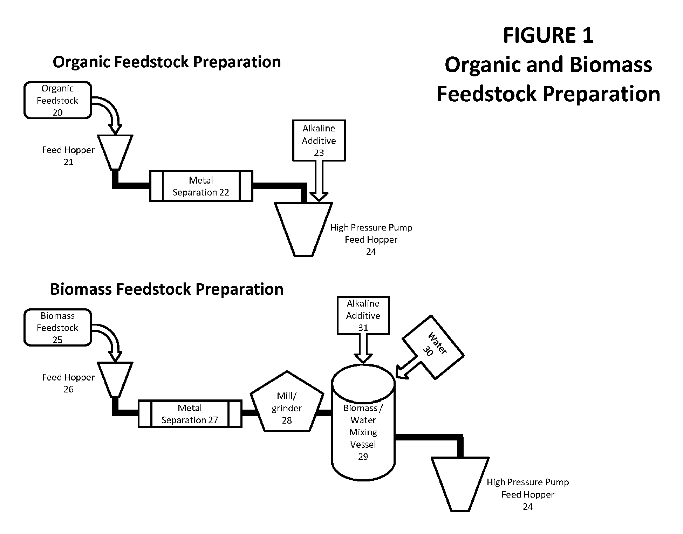

Figure 1 shows flow charts of the processes 20 for the preparation of feedstock.

Organic feedstock 20 is fed into the feed hopper 21 via mechanical loading machine and onto a conveyor belt. It passes a metal separation stage 22 to remove any unwanted metallic objects via an over conveyor magnet and or drum magnet. The material is then deposited into the high pressure pump feed hopper 24 where the alkaline material 23 is added. From here the feedstock is introduced into the core process.

Biomass feedstock 25 is fed into the feed hopper 26 via mechanical loading machine and onto a conveyor belt. It passes a metal separation stage 27 to remove any unwanted metallic objects via a drum magnet and eddy current separator and/or optical metal separator. The conveyor then feeds the biomass into a mill/grinder 28 where the particle size is reduced to less than 5 mm. The mill/grinder 28 deposits the material onto a conveyor belt which in turn feeds into the biomass/water mixing vessel 29. Water 30 is added into the biomass/water mixing vessel 29, the water to wood ratio being anywhere from 10:1 to 2:1. The alkaline material 31 is then added and the 3 components are mixed together. Alkaline material could be added to water prior to mixing with wood fines. Once mixed the material is then pumped into the high pressure pump feed hopper 24. From here the feedstock is introduced into the core process.

It is significant that the feedstock does not need to be dried or otherwise treated before use in the present invention. This provides advantages in terms of cost savings and time savings.

The process is preferably carried out in a continuous manner, for example, by pumping the feedstock reaction mixture through a sufficiently long heated reaction vessel or a reaction vessel preceded by a heater. Alternatively, it can be carried out as a batch process.

The process according to embodiments of the invention is carried out at sub-critical conditions. In other words, the temperature and pressures used in the process of the invention result in the water in the reaction mixture being liquid rather than being a gas or as a super-critical fluid. Subcritical water is less polar than water under normal conditions and solubility of organic materials is significantly increased. Pressures of 6.6-11.6 MPa (65-115 bar gauge) correspond to saturated steam pressure at any given temperature. We found that the lowest practical temperature for the process is about 280°C. At lower temperatures virtually no reaction occurs. The upper temperature of 320°C is preferred for practical reasons. A higher temperature entails complicated reactor arrangement owing to overly high pressure that does not bring any significant gains in terms of product yield or reaction time. The preferred solid:water ratio is about 1:2.5 to about 1:25. At solid ratios higher than about 1:2.5 the yield drastically drops; at ratios below 1:25 product isolation becomes complicated.

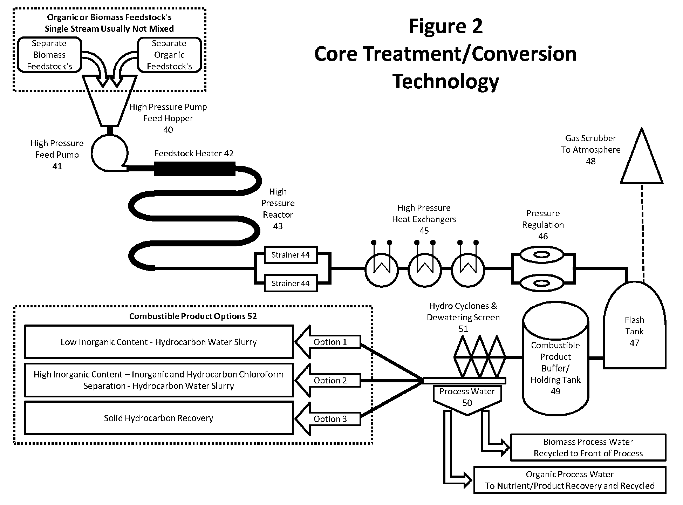

Figure 2 shows flow charts of the processes 40 for the core treatment/conversion technology.

The prepared feedstock mixture present in the high pressure pump feed hopper 40 (24 in Figure 1) is fed into the high pressure feed pump 41 which in turn feeds the feedstock heater 42 at the desired pressure, which may be from 8.1 to 11.1 MPa (80 to about 110 bar gauge) as previously described. The feedstock heater 42 raises the temperature of the mixture to the desired range, which may be from 280°C to 320°C as discussed previously. A preferred way of feedstock heating is to use ohmic heating to efficiently and rapidly raise the temperature of the mixture before the reaction is performed. Ohmic heating works by using the conductivity of the feedstock and passing an electric current through the material, which heats the material itself throughout its bulk. Not only is this efficient, it also minimises problems with traditional heating which can cause fouling around the walls of a reactor or heat exchanger, and also inefficient heating and temperature drop away from the heating element. Other forms of heating appropriate to the process that provide uniform feed heating can also be considered, such as induction heating or microwave heating.

As the temperature of the reaction mixture rises in the feedstock heater 42 to the desired temperature, for example from 280°C to 320°C the pressure also increases to the desired pressure, for example from 6.1 to 11.6 NPa (60 to 115 bar gauge). Under these conditions the aqueous reaction mixture is sub-critical. In other words, the water in the mixture is present in a liquid phase, rather than as a gas, or as a super-critical fluid. It is believed that the properties of the sub-critical water at these temperatures and pressures facilitate the conversion of the organic material into the desired combustible product.

After the temperature and pressure of the reaction mixture has been raised to the desired levels in the feedstock heater 42, the material then passes into a high pressure reactor 43. Preferably the reaction mixture is maintained at the two ranges of temperature and pressure within the high pressure reactor 43 for around 2 to 30 minutes, which is sufficiently long to convert the material to the desired combustible product. Longer reaction times do not necessarily increase the quality or yield of the product significantly, but instead appear to change the size of the particles in the final product. Other traditional forms of heating may be used to maintain the temperature of the mixture as it passes through the high pressure reactor 43.

After being retained at the desired temperature and pressure for a sufficiently long period of time (for example from 2 to 30 minutes, as discussed above) the mixture leaves the high pressure reactor 43 in a purely aqueous state and then passes on for further processing. In Figure 2, the material is shown passing through strainers 44 to remove unwanted heavy particles or contaminates such as glass, sand and stones. Heat is then recovered from the reaction mixture using one or more high pressure heat exchangers 45, this rapidly cools the reaction mixture and improves the overall efficiency of the process.

Pressure regulation 46 equipment maintains the desired pressure range, as described above, within all the high pressure equipment whilst at the same time allowing the finished reaction product to pass into atmospheric pressure via a flash tank 47. At this point the finished reaction product is an aqueous mixture containing water and a combustible product, amongst other components. Small amounts of CO2 are sent from the flash tank 47 to a gas scrubber 48 before being passed to atmosphere. From the flash tank the finished reaction product is pumped to the combustible product buffer/holding tank 49.

The process flow rate is controlled via the high pressure pump 41 at the start of the process and the pressure regulation 46 at the end of the process, this enables full control of the feedstock flow and resonance time of the feedstock in the high pressure reactor 43 to allow for the reaction/conversion to occur and produce the desired combustible product.

The final stage of the core technology is to dewater the finished reaction product using hydro cyclones and a dewatering screen 51. The finished reaction product is pumped from the combustible product buffer/holding tank 49 to the hydro cyclones and dewatering screen 51, here the finished reaction product is subjected to centrifugal forces to separate solids from liquid, the final stage dewatering screen produces the combustible product with a moisture content in the range of 25% - 40%. Other forms of dewatering such as filtration, pressing or centrifugation can also be used.
Process water 50 recovered from the hydro cyclones and dewatering screen 51 has two applications depending on the type of feedstock used in the process. Process water 50 derived from biomass feedstock is recovered and reused within the biomass/water mixing vessel 29 as described in Figure 1. Process water derived from organic feedstock, depending upon the characteristics of the initial feed, may contain materials that are commercially beneficial to recover. Materials such as ammonium sulphate for fertiliser, the recovery of phosphorous for conversion into phosphoric acid and/or other organic nutrients and elements can also be recovered.

Combustible product produced from the hydro cyclones and a dewatering screen 51 can be utilised for fuel in a number of ways to generate electricity and/or heat.

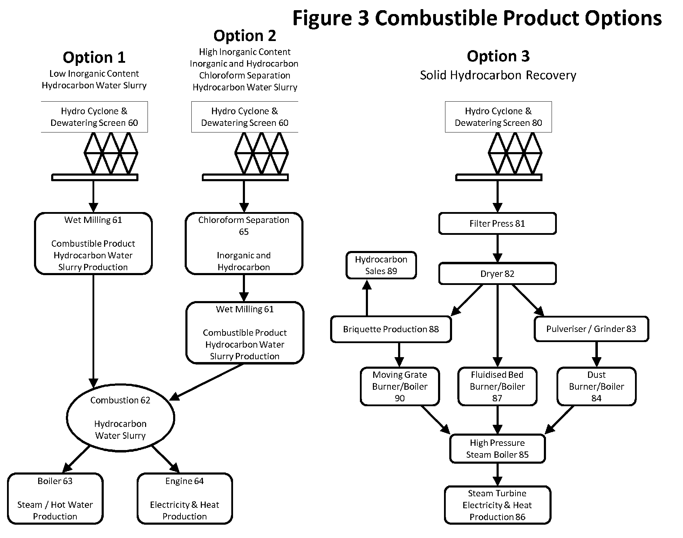

Figure 2 shows the three combustible product options 52 for use of the combustible product as a liquid or dry solid fuel, Figure 3 describes these combustible product options 52 in more detail.

We shall now discuss the various options for the processing and use of the combustible product. Figure 3 shows flow charts with three options for the processing and use of the combustible product.

Firstly we shall refer to the Figure 3 option 1 flow chart of the processes 60 which shows the combustible product being produced into a hydrocarbon water slurry that can be used as fuel for engines to produce electricity and/or as fuel for boilers to produce heat. This option is especially prudent for the types of combustible product produced with a low inorganic content. From the hydro cyclones and dewatering screen 60 (51 in Figure 2) the combustible product is fed into a high shear wet milling machine or emulsifier machine 61 where the particle size is reduced below 10 microns, if required additional water can be added so that the final finished hydrocarbon water slurry is made to a ratio of between 60%-65% combustible material and 35%-40% water. The hydrocarbon water slurry can then be directly combusted 62 in boilers 63 or engines 64 to produce energy as described above.

Secondly we shall refer to the Figure 3 option 2 flow chart of the processes 60 which shows the combustible product being processed to remove inorganic materials and then produced into a hydrocarbon water slurry that can be used as fuel for engines to produce electricity and/or as fuel for boilers to produce heat. This option is especially prudent for the types of combustible product produced with a high inorganic content.

From the hydro cyclones and dewatering screen 60 (51 in Figure 2) the wet combustible product is fed into an inorganic and organic chloroform separation system 65 that utilises chloroform to remove the combustible organic product from any inorganic material. In this system the combustible product is mixed with chloroform so that the hydrocarbons become miscible with the chloroform. This mixture is then separated from the residual water via gravity and the chloroform evaporated which results in the combustible product, now separated from all inorganic material, being recovered and produced to a high quality. The chloroform is recycled to the front of the separation process. Depending on the type of organic feedstock used the inorganic material recovered by the process may have commercial value in applications such as a soil improver, fertiliser and/or pest control product.

Once recovered from the chloroform separation system 65 the liquid combustible product is fed into a high shear wet milling machine/emulsifier 61 where the droplet size is reduced below 10 microns, if required additional water can be added so that the final finished hydrocarbon water emulsion is made to a ratio of between 60%-85% combustible material and 15%-40% water. The hydrocarbon water emulsion can then be directly combusted 62 in boilers 63 or engines 64 to produce energy as described above.

Finally, we shall refer to the Figure 3 option 3 flow chart of the processes 80 which shows the combustible product being processed to produce a dry solid product that can be commercially marketed as biofuel briquettes and/or used as fuel in various types of burner/boilers in order to raise high pressure steam that is utilised in a steam turbine to produce electricity and heat.

From the hydro cyclones and dewatering screen 80 (51 in Figure 2 and 60 in Figure 3 option 1 and Figure 3 option 2) the combustible product is fed into a filter press 81 for further dewatering. The combustible product is then sent to a low temperature dryer 82, on exiting the dryer 82 the product is now in a dry solid form and can be utilised in a number of ways.

Firstly, the solid material is sent from the dryer 82 to a pulveriser/grinder 83 so that the solid material is reduced to a small uniform particle size or dust that is utilised in a dust burner/boiler 84 to raise high pressure steam 85, which in turn is provided to a steam turbine 86 for the production of electricity and heat.

Secondly, the solid material can be sent from the dryer 82 directly to a fluidised bed burner/boiler 87 to raise high pressure steam 85, which in turn is provided to a steam turbine 86 for the production of electricity and heat.

The final option is to send the solid material produced from the dryer 82 to briquette production 88. Here the solid material is manufactured into compacted bricks/blocks of fuel which can be marketed via hydrocarbon sales 89 or the briquettes utilised within a moving grate burner/boiler 90 to raise high pressure steam 85, which in turn is provided to a steam turbine 86 for the production of electricity and heat.

It will be appreciated that any suitable dewatering techniques may be employed in the process; for example, centrifuging, dewatering screw, cyclone, or filter press. Similarly, any suitable mixing means may be used for mixing feedstock such as wood fines with water prior to conversion. Suitable dewatering apparatus and mixing apparatus will be well known per se to those skilled in the art.

The invention is illustrated by the following examples.

### EXPERIMENTAL

### Feedstock: Digested Sewage Sludge Cake

Digested sewage sludge cake from Anglian Water Whitlingham site was used at the beginning of this study as the primary raw material. The sludge cake is dewatered residue left after full sludge processing and anaerobic digestion. The dewatered sludge cake is black in colour and a spongy sticky material with an organic odour. It has non-Newtonian rheology properties (i.e. shear-dependent) and has a tendency to bridge. The dewatered sludge cake has moisture content of 70% (as determined by Anglian Water and confirmed by ICL West Thurrock lab). According to the data obtained from Anglian Water the solid fraction of the cake has the following composition:
Organic material 61.5%;
Ash 39.5%.

The following data obtained from Anglian Water has been confirmed by ICL West Thurrock lab. In summary the ash determination is 11.99 % and dry Solids are 40% in wet sludge cake. This approximately corresponds to the Anglian Water data.

Sewage sludge cake statistics table from Anglian Water are shown in Table 1.

**Table 1**

| **Sewage Sludge Cake Statistical Analysis** | | | | | | |
|---|---|---|---|---|---|---|
| **Name** | **Units** | **Number of samples** | **Mean** | **SD** | **MIN** | **MAX** |
| pH Sludge | pH units | 67 | 8.56 | 0.18 | 8.21 | 8.91 |
| Copper Total in Dry Solids | Mg/kg Cu | 7 | 441 | 83 | 276 | 554 |
| Zinc Total in Dry Solids | Mg/kg Zn | 7 | 705 | 114 | 475 | 807 |
| Cadmium Total in Dry Solids | Mg/kg Cd | 7 | 0.83 | 0.14 | 0.66 | 1.09 |
| Mercury Total in Dry Solids | Mg/kg Hg | 7 | 1.19 | 0.22 | 0.95 | 1.6 |
| Lead Total in Dry Solids | Mg/kg Pb | 7 | 114 | 39 | 68 | 172 |
| Chromium Total in Dry Solids | Mg/kg Cr | 7 | 32.3 | 5.4 | 23.3 | 38.7 |
| Selenium Total in Dry Solids | Mg/kg Se | 7 | 4.22 | 0.95 | 2.63 | 4.98 |
| Molybdenum Total in Dry Solids | Mg/kg Mo | 7 | 7.1 | 1.2 | 4.8 | 8.7 |
| Nickel Total in Dry Solids | Mg/kg Ni | 7 | 27.6 | 5.2 | 21 | 36.6 |
| Arsenic Total in Dry Solids | Mg/kg As | 7 | 5.1 | 0.8 | 3.6 | 5.8 |
| Sulphur Total in Dry Solids | mg/kg S | 7 | 17657 | 2936 | 14200 | 23200 |
| Total Organic & Volatile Solids (50°C) | %DS | 7 | 61.5 | 0.9 | 60.2 | 62.6 |
| Total Dry Solids at 105 °C | % | 67 | 27 | 2.1 | 20.6 | 33.6 |
| Nitrogen Kjeldahl in Dry Solids | % N | 7 | 4.75 | 0.42 | 3.94 | 5.12 |
| Ammonia Total in Dry Solids | % N | 7 | 0.82 | 0.09 | 0.73 | 0.97 |
| Phosphorus Total in Dry Solids | % P2O5 | 7 | 7.45 | 1.08 | 5.11 | 8.5 |
| Magnesium Total in Dry Solids | Mg/kg Mg | 7 | 5413 | 1859 | 2070 | 7080 |
| Potassium Total in Dry Solids | % K2O | 7 | 0.24 | 0.07 | 0.14 | 0.3 |
| Fluoride Total in Dry Solids | mg/kg F | 7 | 207 | 45 | 134 | 264 |

### Digested Sewage Sludge Cake Basildon site

Digested sewage sludge cake from Anglian Water Basildon site had the same overall appearance as the sludge from Whithingham site. However, the solids and ash content was slightly different from that of Whithingham. The average water content was 79.7%, the ash content in total sludge cake was 6.7%, making ash content in solids 33%.

### Digested Sewage Sludge Cake Thames Water Beckton site

The overall appearance of dewatered sewage sludge cake from Thames Water Beckton site was completely different from both sludge samples obtained from Anglian Water. The analysis revealed water content of 81% and ash content 2.6% making ash content in solids 13.7%.

### Feedstock: Anaerobic Digestion Liquor

Another feedstock tested was liquor from an anaerobic digestion plant obtained from Strutt and Parker Farms.

The analysis of the liquor is shown below.

| | |
|---|---|
| Solid material content in AD liquor | 5.40% |
| Nitrogen content in AD liquor | 0.39% |
| Ash content in solid material | 20.15% |

### Feedstock: Compost from RIO Soils Ltd

Compost obtained from RIO Soils was also tested as potential biomass feedstock. It had the lowest water content among all feedstocks: 49.7% and the highest total ash content: 34.8% making ash content in solids 69.2%.

### Bench Scale Process: Rapid Subcritical Hydrothermal Carbonification

Rapid Subcritical Hydrothermal Carbonification is the process of treatment various organic and biomass wastes with water at increased temperature and pressure at subcritical or critical parameters. The result is a solid/liquid combustible product with calorific value significantly higher than that of the original feedstock.

Bench scale carbonification was carried out on a batch basis using a pressurised stainless steel bomb heated in an oven. The bomb was charged with 300 - 500 g of sewage sludge cake and 2-4 g of a catalyst dissolved in 40-60 ml of water. The following compounds were tested as the catalysts (solid sodium hydroxide, sodium carbonate and sodium formate). Caustic solution (50%) was also tested as the catalyst.

In case of compost the load was ~ 300 g of compost and ~ 200 g of water as intrinsic water content in compost was much lower than that in the sewage sludge cake. Caustic solution (50%) and solid sodium carbonate were tested as catalysts.

In case of AD liquor the load was 450-700 g of AD liquor. Only sodium carbonate was tested as a catalyst.

After testing several catalysts and running the process in the absence of catalysts it was decided to run all further experiments in the presence of sodium carbonate or 50% caustic solution. The weight loss in their presence was minimal and the product after carbonification had the most pungent hydrocarbon odour.

Once the bench scale parameters had been established repeatable reactions and results were able to be obtained. Once the bomb was charged with feedstock and placed in an electric oven the following parameters were used;
1. Electric oven heated to 300 - 320°C
2. Duration 2.5 - 3.5 hours. Some of the experiments were run up to 72 hours.

After the reaction the bomb was immediately cooled by tap water to 60-70 °C and plugs opened. A gas with a sharp hydrocarbon odour was allowed to escape. The main contents of the bomb a dark coloured liquid material is transferred into a sampling flask. From here the material is weighed and then separated into solid and liquid fractions using a lab centrifuge at 3000 rpm for 30 min -1 hour. To enable gas analysis the bomb was equipped with a needle valve and gas was collected into a five litre gas sampling bag. Gas was sampled. However, due to Intertek lab requirements finally gas was analysed using headspace from a solid product sample.

Bench scale reaction analysis is given in Table 2:

**Table 2**

| **Time hour** | **Catalyst** | **Temperature, °C** | **Reaction** |
|---|---|---|---|
| 2.5 | 1 | 250 | 0 |
| 2.5 | 0 | 280 | 0 |
| 6 | 0 | 280 | 1 |
| 2.5 | 0 | 300 | 0 |
| 0.5 | 0 | 320 | 0 |
| 6 | 0 | 300 | 1 |
| 6 | 1 | 320 | 1 |
| 5 | 1 | 300 | 1 |
| 3 | 1 | 300 | 1 |
| 2.5 | 1 | 300 | 1 |

| | | | |
|---|---|---|---|
| Catalyst: 1 = presence of the catalyst, 0 = absence of the catalyst Reaction: 1 = reaction proceeds, 0 = no reaction occurs | | | |

The above data demonstrates that using the bomb reactor the best conditions are 300° C, 2.5 hours heating time and 0.7% catalyst (calculated on a sludge cake weight). Sodium carbonate was used as the catalyst.
However, the actual reaction time is significantly shorter due to the long time required for the reaction mixture within the bomb to reach the necessary temperature.
The products obtained from digested sewage sludge were characterised and analysed using PSA, XRF, IR, ICP, wet chemistry methods and calorimetry.

### Bench Scale Process: Outputs and analytical results

### Whitlington site sludge

The products produced through the reaction are gas, combustible solid material, oil (absorbed on the solids) and water (yields quoted are calculated in relation to solids in the sludge). Surprisingly, no pure liquid hydrocarbon products were directly obtained from the reaction.

Gas from the reaction was sampled using a needle valve and gas sampling bags. Gas yield were estimated from the mass balance of charged and obtained material. On average the gas yield does not exceed 10% and is estimated as being between 1 and 5%.

### Combustible Solid Material

The reaction mixture upon discharge from the reactor was separated using a lab centrifuge at 3000 rpm into a solid fraction and wastewater. The solid fraction is a coal-like black material with a strong characteristic hydrocarbon odour with a moisture content after centrifugation of 53%. As a test the obtained solid material was self ignited when placing it into a hot oven confirming its combustibility. The self-ignition temperature is around 600 - 650 °C.

The solid material obtained after centrifugation was further dried in an oven at 105°C to remove the remaining residual water and once dried analysed for ash content. The result of this analysis was an ash content of 46.32%; this percentage is what was expected and confirms the elevated ash content in the raw feedstock. The ash content in the crude sludge cake is 11.9% which is equivalent to 40% of ash content as dry solids in the crude sludge cake. This also corresponds to the content of organic matter as dry solids in crude sludge cake (61.5%). The ash remains insoluble in water and is incorporated into the produced hydrocarbons. The ash composition is circa 15-25 % iron (in the form of iron III oxide and iron III phosphate), 5.03 alumina (Al₂O₃), circa 5% phosphorus (in the form of iron phosphate), 10-20% calcium with the remainder being silica.

The hydrocarbons formed as a result of sludge carbonification are in two components; a solid hydrocarbon and a tar hydrocarbon. For research purposes the solid sample after centrifugation was washed with acetone and the acetone evaporated. The evaporation produced a tar-like black viscous hydrocarbon liquid with approximately 9% yield (calculated on the total solids weight). That liquid supports combustion when ignited.

Even though as part of these bench scale trials the hydrocarbon tar has been separated and analysed, in reality both these fractions are combined as the tar is absorbed into the solids making a solid hydrocarbon type fuel similar to fine coal or coke.

From the reaction the total hydrocarbon yield is about 85-90%, based upon the organic content in the dry sludge cake.

The solid portion of hydrocarbons was analysed by IR-spectroscopy. Its IR spectrum has bands characteristic to aliphatic and olefin groups and is similar to that of the coal. The IR spectrum of tar is similar to that of heavy fuel oil.

The total gross calorific value (CV) of product (including 43% ash) is 15.80 MJ/mol. That makes the CV of the combustible fraction of the product (without ash) 36.7 MJ/kg. The calorific value of the solid fraction without tars is 12.55 MJ/kg. Assuming the liquid fraction of the product as 9% of the total, the CV of liquid tars is (15.8-12.55)/0.09 = 36 MJ/kg.

The analytical results obtained on the biofuel product clearly show an excellent energy content, thus proving the viability of the process used with sewage sludge even with the high ash content.
The results show a substantial increase in calorific value compared with the feedstock as will be shown further in Table 7.

A solid sample (0.1g), obtained from sewage sludge cake as the feedstock, was dissolved in a mixture of toluene and heptane (80:20 v/v, 10mL) which was then filtered to remove the undissolved sample. The chloroform extract was diluted 1 in 2 with chloroform before both samples were examined by liquid injection onto an Rxi-5ms capillary column (30m x 0.25mm x 0.25µm) interfaced with a PE Clarus quadrupole mass spectrometer operating in full scan mode, scanning from 33 to 620 Daltons. Results are summarised in Table 3.

**Table 3**

| Identities assign to the en most prominent peaks | | |
|---|---|---|
| **Retention time (min)** | **Compound** | **CAS number** |
| 23.62 | 3,6-Diisopropylpiperazin-2,5-dione or similar | 5625-44-5 |
| 25.17 | 3,6-Bis(2-methylpropyl)-2,5-piperazinedione or similar | 1436-27-7 |
| 25.35 | 3-Isobutylhexahydropyrrolo[1,2-a]pyrazine-1,4-dione isomer or similar | 5654-86-4 |
| 25.41 | 3-Isobutylhexahydropyrrolo[1,2-a]pyrazine-1,4-dione isomer or similar | 5654-86-4 |
| 25.60 | Palmitic acid | 57-10-3 |
| 28.68 | Palr itamide | 629-54-9 |
| 29.45 | 3-Benzyl-6-isopropyl-2,5-piperazinedione | 14474-71-6 |
| 3076 | Cyclo(leucyl-phenylalanyl) isomer or similar | 7280-77-5 |
| 31.08 | Cyclo(leucyl-phenylalanyl) isomer or similar | 7280-77-5 |
| 39.28 | Cholestanol | 80-97-7 |

### Compost

The process was carried out in on compost the same manner as that of sewage sludge. The discharge of product was difficult due to high amount of foreign inorganic impurities (stones, pebbles, etc). The gross CV was 7.25 MJ/kg, ash content 70-75%, ash-free CV ~ 26 MJ/kg.

### AD Liquor

Carrying out the process on AD liquor produced material with gross CV 22.48 MJ/kg, ash content 20%. Ash-free CV~ 28 MJ/kg.

The data presented above clearly demonstrate that results of the biomass conversion are highly consistent regardless of the feedstock, Calorific value of the obtained combustible product on an ash-free basis is in the range of 28-36 MJ/kg thus significantly exceeding that of the feedstock.

### Reaction in a stirred Parr reactor under controlled conditions

After completion of the cycle of experiments in the unstirred pressurised bomb it became clear that this set-up does not allow determination of the required residence time as the exact temperature and pressure inside the bomb are not known and could only be estimated by the oven temperature. Also it was not known how long it takes for the temperature inside the bomb to reach the required value.
The experimental set-up included stainless steel stirred reactor Parr Series 4520 Bench Top Reactor one litre volume equipped with variable speed electric motor with magnetic drive, electric heater, internal cooling coils, thermocouple, pressure gauge and pressure transmitter and several valves attached to the lid. For safety purposes the reactor was equipped with a bursting disk. The set-up was controlled with 4870 Process Controller and 4875 Power Controller. The process control and data logging was implemented using SpecView software. The cooling of the reaction mixture was performed through internal cooling coils connected to Endocal RTE-Series refrigerated bath.
The experimental programme comprised running experiments at 300°C, 10.45-11.14 MPa (1500-1600 psig) and different residence times. The following residence times were selected (in minutes): 15, 30. 45, 60, 90, 120. The reactor was charged with 400 g of Basildon digested sewage sludge, 10-12 g of 50% caustic, then it was sealed, heating was started and the mixture was stirred at 250-300 rpm. The moment the temperature in the reactor reached 297.5-298°C it was taken as the start of the reaction and after the required residence time was reached, the heater was switched off and removed and reactor contents were quickly cooled by passing cold water through the inside coils. When the internal temperature reached 28-32°C, the stirring was stopped and excess of formed gas was flashed through one of the valves on top of the reactor. The reactor was opened and contents were transferred into a 2- litre beaker and weighted. The weight loss in all the cases did not exceed 5%.

Obtained reaction mixture was analysed for particle size distribution and separated onto the solid fraction and the aqueous fraction using centrifuge or vacuum filtration.

The digested sludge was completely converted into combustible product even at short residence time (15 min). Increase in residence times resulted in a small decrease in particle size and an increase in residual gas pressure implying higher gas yield.

We found that longer residence times result in finer particle formation, confirming results obtained in the unstirred bomb. However, the same or even small particle size is obtained in significantly shorter time (15-30 min) instead of 3-5 hours.

Particle size distribution results are given in Table 4.

**Table 4**

| Reaction time | | Size, micron | | | | | |
|---|---|---|---|---|---|---|---|
| % | | 15 | 30 | 45 | 60 | 90 | 120 |
| | 5 | 2.627 | 2.341 | 2.685 | 1.22 | 2.054 | 2.441 |
| | 10 | 3.52 | 3.06 | 3.33 | 2.41 | 2.48 | 2.86 |
| | 15 | 4.64 | 3.96 | 4.21 | 2.82 | 2.83 | 3.3 |
| | 20 | 6.11 | 4.96 | 5.75 | 3.27 | 3.2 | 3.87 |
| | 25 | 7.9 | 6.1 | 9.83 | 3.91 | 3.67 | 4.73 |
| | 30 | 9.91 | 7.54 | 11.53 | 5.04 | 4.38 | 6.14 |
| | 35 | 12.07 | 9.17 | 12.71 | 6.75 | 5.51 | 9.21 |
| | 40 | 14.44 | 11.02 | 13.9 | 9.85 | 7.51 | 10.83 |
| | 45 | 17.59 | 13.38 | 15.54 | 11.37 | 12.44 | 13.41 |
| | 50 | 21.72 | 15.9 | 31.35 | 12.44 | 11.23 | 12.6 |
| | 55 | 27.87 | 19.75 | 51.49 | 13.41 | 12.14 | 13.41 |
| | 60 | 35.42 | 25.42 | 74.64 | 14.41 | 12.96 | 14.24 |
| | 65 | 44.97 | 33.73 | 96.65 | 15.68 | 13.23 | 15.35 |
| | 70 | 57.13 | 43.57 | 110.8 | 19.76 | 14.93 | 17.55 |
| | 75 | 73.55 | 53.42 | 122.4 | 30.47 | 17.41 | 28.77 |
| | 80 | 98.08 | 73.38 | 131.4 | 35.92 | 31.03 | 32.82 |
| | 85 | 120.3 | 89.33 | 139.3 | 50.14 | 35.66 | 49.97 |
| | 90 | 138.5 | 102.3 | 146.9 | 71.58 | 56.64 | 59.23 |
| | 95 | 158.5 | 126.4 | 157.4 | 81.47 | 67.93 | 85.59 |
| | 99 | 188.6 | 135.9 | 173.8 | 93.64 | 83.02 | 98.75 |

After the separation, the combustible product was dried for 24 hours at 60-80°C and was analysed for calorific value and ash content. Ash was determined by burning a sample in a porcelain crucible at 850°C for 7 hours. Results are given in Table 5.

**Table 5**

| Residence time, min | 15 | 30 | 45 | 60 | 90 | 120 |
|---|---|---|---|---|---|---|
| Ash, % | 47.65 | 53.68 | 50.21 | 51.38 | 47.41 | 47.56 |
| CV gross, MJ/kg | 16.32 | 16.22 | 16.92 | 16.42 | 17.46 | 16.92 |
| CV (ash-free), MJ/kg | 31.2 | 35.01 | 33.98 | 33.77 | 33.2 | 32.26 |

Several experiments were devoted to extracting oil from the combustible product obtained using Basildon sludge as a feedstock. The reaction mixture was stirred with 250-300 ml of chloroform for 4-5 at 50-55°C, then the solids were filtered off and the liquid part was separated into aqueous phase and chloroform. The solids were extracted several times with chloroform, chloroform extracts were combined and filtered, and chloroform was removed under water-jet vacuum. Black viscous oil was obtained in quantities ranging from 22.4 to 30 g. That approximately corresponds to 63% yield of oil (based on organic content in the sludge). Residual solids were dried at 50°C. We obtained solids with ash content ranging from 65 to 80%. The calorific value of the oil averaged at 36.5 MJ/Kg again demonstrating a substantial increase over that of the original feedstock.

It became evident that by a conservative estimate the residence time between 15 and 30 min at 300°C and 11.14 MPa (1600 psig) is sufficient for the conversion of the sewage sludge.

### Conversion of Southern Water sludges

We were supplied with five samples of sludge from different sites of Southern Water. The properties of the sludges are given in Table 6.

**Table 6**

| Waste Water Treatment Works | Digested Liquid/Cake | Dry Solids in the Cake, % | Cake Dry Solids CV, MJ/kg | Product CV Ash Free, MJ/kg |
|---|---|---|---|---|
| Anglian Water Whitlingham Site | Cake | 30.1 | 12-14 | 36.7 |
| Anglian Water Basildon Site | Cake | 18 | 12-14 | 35.6 |
| Southern Water Ashford Site | Liquid | 4.7 | -- | 34.6 |
| Southern Water Budds Farm Site | Liquid | 4 | -- | 32.0 |
| Southern Water Ford Site | Liquid | 3.7 | -- | 33.9 |
| Southern Water Millford Site | Cake | 25 | 12-14 | 34.6 |
| Southern Water Peacehaven Site | Cake | 23 | 12-14 | 33.8 |

The samples were converted to combustible product using the same method as previously (~ 300°C, ~ 10.1 MPa (100 barg), 15 min at this temperature, then rapid cooling using cooling coils of the reactor). Results are given in Table 7.

**Table 7**

| **Solid fuel properties** | | | | |
|---|---|---|---|---|
| **Fuel yield on dry solids, %^{†}** | **Gross CV, MJ/kg** | **Ash, %** | **CV on ash-free basis, MJ/kg** | **CV increase relative to sludge, %** |
| 68.9 | 14.4 | 58.41 | 34.62 | |
| 87.9 | 15.64 | 51.09 | 31.98 | |
| 55.7 | 14.3 | 57.45 | 33.86 | |
| 69.9 | 19.3 | 42.72 | 34.57 | 51.74 |
| 74.2 | 16.74 | 50.44 | 33.78 | 34.79 |

Samples prior to CV determination were dried at 105°C overnight. In order to check whether if there is a loss of light combustible components one sample was dried at room temperature under vacuum. Its gross CV (Millford) was 17.52 MJ/kg, roughly the same as of that dried at 105 °C, so no light components are present. Analysis results are given in Table 8.

**Table 8**

| | | | **Results Basis** | | | |
|---|---|---|---|---|---|---|
| **Test** | **Method Reference** | **Units** | **As Received *** | **As Analysed** | **Dry *** | **Dry Ash Free *** |
| Analysis Moisture | CA2 | % | - | 1.8 | - | |
| Ash | CA3 | % | 46.5 | 49.5 | 50.4 | |
| Total Moisture | SP19 & CA2 | % | 7.8 | | - | |
| Volatile Matter | CA6 | % | 38.0 | 40.5 | 41.2 | 83.2 |
| Sulphur | CA31 | % | 1.66 | 1.77 | 1.80 | 3.63 |
| Chlorine | CA36 | % | 0.02 | 0.02 | 0.02 | 0.04 |
| Gross Calorific Value | CA11 | kJ/kg | 16500 | 17574 | 17896 | 36105 |
| Net Calorific Value | * | kJ/kg | 15504 | - | - | - |
| Carbon | CA9 | % | 35.94 | 38.28 | 38.98 | 78.64 |
| Hydrogen | CA9 | % | 3.78 | 4.03 | 4.10 | 8.27 |
| Nitrogen | CA9 | % | 2.83 | 3.01 | 3.07 | 6.19 |
| Fixed Carbon | * | % | 7.7 | 8.2 | 8.4 | 16.8 |

The processing of sewage sludge under controlled conditions in a stirred reactor confirmed the consistency of the properties of the obtained combustible product regardless of the feedstock and also confirmed the previous results obtained in the unstirred bomb.

### Wood fines conversion

### Properties of waste wood fines

Bulk weight 300 kg/m³
Moisture content ~15-30%
Ash content 2.5- 3.6%
Gross calorific value 12-15 MJ/kg
Wood fines (60-90 g) were mixed in a Parr reactor with water (220-250 g) and 50% sodium hydroxide (3-5 g) and reacted using the same process conditions as previously used for the sludge carbonification. The experiment was repeated in excess of 20 times. Product yield was circa 50%. Analysis results are given in Table 9.

**Table 9**

| | | | **Results Basis** | | | |
|---|---|---|---|---|---|---|
| **Test** | **Method Reference** | **Units** | **As Received *** | **As Analysed** | **Dry *** | **Dry Ash Free *** |
| Analysis Moisture | CA2 | % | - | 1.4 | - | - |
| Ash | CA3 | % | 18.1 | 18.9 | 19.2 | |
| Total Moisture | SP19 & CA2 | % | 5.5 | - | - | - |
| Volatile Matter | CA6 | % | 42.9 | 44.8 | 45.4 | 56.2 |
| Sulphur | CA31 | % | 0.32 | 0.33 | 0.34 | 0.42 |
| Chlorine | CA36 | % | 0.03 | 0.03 | 0.03 | 0.04 |
| Gross Calorific Value | CA11 | kJ/kg | 24813 | 25890 | 26257 | 32478 |
| Net Calorific Value | * | kJ/kg | 23614 | - | - | - |
| Carbon | CA9 | % | 61.20 | 63.86 | 64.76 | 80.10 |
| Hydrogen | CA9 | % | 4.98 | 5.20 | 5.27 | 6.52 |
| Nitrogen | CA9 | % | 3.33 | 3.47 | 3.52 | 4.36 |
| Fixed Carbon | * | % | 33.5 | 34.9 | 35.4 | 43.8 |

| **Test** | **Method Reference** | **Units** | **Results** | | | |
|---|---|---|---|---|---|---|
| Ash Fusion Temperatures | ** | deg C | **I.D.** | **Softening** | **Hemisphere** | **Flow** |
| | | | 1050 | 1070 | 1090 | 1150 |
| Reducing Atmosphere | | | | | | |

The results of waste wood conversion confirmed the reproducibility of the results and consistency of the properties of the obtained combustible product. The obtained combustible product has gross calorific value nearly double that of the original waste wood material.

The combustible product of the process, obtained from organic or biomass feedstock, may be burnt like coal to produce heat, or it may be further treated by milling and mixing with water to produce a suspension suitable for use as a liquid fuel. Such a liquid fuel may have advantages over other liquid fuels made from fossil coal, because the solid particles from the process according to the present invention are far less abrasive than fossil coal and are therefore more suitable for use in engines such as compression ignition engines, which suffer from excessive wear with conventional fossil coal-based fuel suspension.
The combustible product with high ash content may also be treated to extract a liquid hydrocarbon fraction which may be used as a fuel or formed into a water-based emulsion for use as a liquid fuel.

## Claims

1. A process for producing a combustible product from an organic or biomass feedstock, the process comprising:
mixing the feedstock with an alkaline material to give an alkaline aqueous mixture;
reacting the mixture under subcritical conditions at a temperature in the range of about 280°C to about 320°C and a pressure of about 6.6 to about 11.6 MPa (65 bar gauge to about 115 bar gauge); and
removing at least some of the water to leave a combustible product.

2. A process as specified in claim 1, wherein the weight ratio of solid:liquid in the mixture is in the range about 1:2 to about 1:25, preferably about 1:3 to about 1:7, particularly preferably about 1:3 to about 1:5.

3. A process as specified in claim 1 or claim 2, wherein the reaction under subcritical conditions is carried out over a period of at least about 1 minute, preferably at least about 2 minutes, particularly preferably at least about 5 minutes; and at most about 60 minutes, preferably at most about 30 minutes.

4. A process as specified in any one of the preceding claims, wherein the alkaline material is added in an amount about from 0.1 to 10% (calculated on 100% base content), preferably about 1 to about 5% w/w.

5. A process as specified in any one of the preceding claims, wherein the feedstock is an organic feedstock selected from one or more of: sewage material, sewage sludge, digested sewage sludge, digested human sewage sludge, digested dewatered sewage sludge cake, farm slurry, livestock slurry, pig slurry, cow slurry, compost, plant material, food production wastes, food production slurry, anaerobic digestate.

6. A process as specified in any one of claims 1-4, wherein the feedstock is a biomass feedstock selected from one or more of: wood chippings, wood fines, saw dust, waste wood, waste treatment wastes, bio crops, plant matter.

7. A process as specified in any one of the preceding claims, wherein the alkaline material is selected from: sodium hydroxide, potassium hydroxide, sodium carbonate, potassium carbonate, sodium formate, potassium formate, calcium hydroxide.

8. A process as specified in any one of the preceding claims, wherein the reaction is carried out at a pressure in the range of about 8.1 to about 11.1 MPa (80 to about 110 bar gauge), preferably about 9.1 to about 10.6 MPa (90 to about 105 bar gauge).

9. A process as specified in any one of the preceding claims, carried out in a tubular reactor or a plug flow reactor.

10. A process as specified in any one of the preceding claims, wherein the mixture is heated by ohmic or induction heating.

11. A process as specified in any one of the preceding claims, the process further comprising the step of combusting at least some of the combustible product.

12. A process as specified in any one of claims 1-10, further comprising milling the combustible product to produce fine particles, preferably of size less than about 10 µm, and mixing the particles with water, optionally with a surfactant and/or a stabiliser, to produce an aqueous suspension suitable for use as a liquid fuel.

13. A process as specified in any one of claims 1-10, further comprising extracting a liquid hydrocarbon fraction from the combustible material, and mixing the extracted hydrocarbon fraction with water, optionally with a surfactant and/or a stabiliser, to produce an emulsion suitable for use as a liquid fuel.

14. An aqueous suspension suitable for use as a liquid fuel, obtainable by taking the combustible product from the process of any one of claims 1-10, milling the combustible product to produce fine particles, and mixing the particles with water.

15. An aqueous emulsion suitable for use as a liquid fuel, obtainable by taking the combustible product from the process of any one of claims 1-10, extracting a liquid hydrocarbon fraction from the combustible product, and mixing the extracted hydrocarbon fraction with water in the presence of a surfactant.
